# EUROPEAN PATENT SPECIFICATION

(11) **EP 0 378 864 B1**
(45) Date of publication and mention of the grant of the patent: **19.05.1993**
(21) Application number: 89200098.5
(22) Date of filing: 18.01.1989
(51) Int. Cl.: B01D 35/14, F15B 1/06

(54) **Filter assembly for use in a hydraulic circuit**
Filteranlage für die Verwendung in einem Hydraulikkreis
Ensemble de filtrage pour un circuit hydraulique

(43) Date of publication of application: 25.07.1990
(73) Proprietor: NEW HOLLAND BELGIUM N.V., B-8210 Zedelgem (BE)
(72) Inventor: Deroo, Roger C., B-8210 Zedelgem (BE); Catrysse, Gerda L.M., B-8100 Torhout (BE)
(74) Representative: Vandenbroucke, Alberic

(56) References cited:
- EP-A- 0 255 768

## Description

The invention relates to a filter assembly for use in a hydraulic circuit in general and although it will be discussed primarily in relation to application on an agricultural machine, more specifically a combine harvester, it is to be understood that it is not only applicable to any other type of agricultural machine which employs hydraulic components, such as a forage harvester, for example but also to any other industrial machine embodying a hydraulic system.

Filter assemblies are known to be incorporated in a hydraulic system in order to remove contamination from hydraulic fluids cycled therethrough. As a result of proper filtration, the overall cost of machinery, operation and maintance can be reduced. In principle, a filter positioned in the return line of a hydraulic circuit, receives pressurized oil from hydraulic components, such as a pump, for example. The supplied oil is processed by a filtering element contained in the filter housing and thereafter discharged to a fluid storage means or reservoir. Normally, at the inlet port of the filter assembly a slight overpressure is sensed finding its origin in the filter element causing an obstructive resistance to free flow of hydraulic fluid therethrough. This overpressure gives rise to a certain deflection of the filter housing but presents no problem for the structural strength of the applied material.

In certain applications e.g. on a combine harvester, and under certain conditions large hydraulic actuators are in operation and sometimes are emptied through the return line at once creating a massive pressurized flow towards the reservoir. In case another fluid consumer subsequently claims the full pump delivery, then the return line is shut-off completely and the supply of fluid thereto is stopped instantaneously. Yet, the fluid in motion in the return line at first has a tendency to continue its flow due to the inertia forces experienced thereby. As a result, since an addition of fluid at the inlet side of the return line is prevented, a certain degree of underpressure is created near the inlet port of the filter assembly. This underpressure is equally sensed near the inlet of the filter housing and effects a distortion of parts of the filter housing in a direction opposite to the one when overpressure is reigning. Pressure variations under and above atmospheric pressure in the filter assembly are thus likely to occur frequently when the hydraulic system of the combine harvester is in operation. Portions of the filter housing continuously have to endure loads imposed in alternating directions and in the long run are unable to cope therewith. Fatigue failures of the filter housing are the result causing leakage and necessitating premature replacement of the filter.

It is the objective of the present invention to solve the aforementioned problems and more specifically to provide a filter assembly which prevents the building up of an underpressure therewithin.

According to the present invention, a filter assembly is provided for use in the return line of a hydraulic circuit; said filter assembly comprising :
- an inlet port for receiving hydraulic fluid from constituent components of the hydraulic circuit,
- an outlet port for conducting the hydraulic fluid to a storage means, and
- a filter element positioned inbetween the inlet and outlet port of the filter assembly and operative to remove foreign particles from the hydraulic fluid.

This filter assembly is characterized in that :
it further also comprises underpressure relief means located inbetween the inlet port and the filter element for preventing that an underpressure is created at said location.

The underpressure relief means preferably may be in the form of a ball type check-valve or non-return valve integrally provided in the filter body. The non-return valve is operative to permit drawing in air into the hydraulic circuitry as soon as an underpressure would tend to build up and to thereby undo the same. Excessive alternating pulsations on the filter housing are thus eliminated and the risk of premature structural failure highly reduced.

A filter assembly incorporating the present invention will now be described in greater detail, by way of example, with reference to the accompanying drawings, in which :
Figure 1 is a cross-sectional view of a filter assembly, according to one embodiment of the invention,
Figure 2 is a diagramatic side view of a combine harvester to which the invention is applied,
Figure 3 is a hydraulic circuit diagram as used on the combine harvester according to Figure 2,
Figure 4 is a top view as seen in the direction of arrow F in Figure 1,
Figure 5 is a cross-sectional view of another embodiment of the present invention, and
Figure 6 is a cross-sectional view of still another embodiment of the invention.

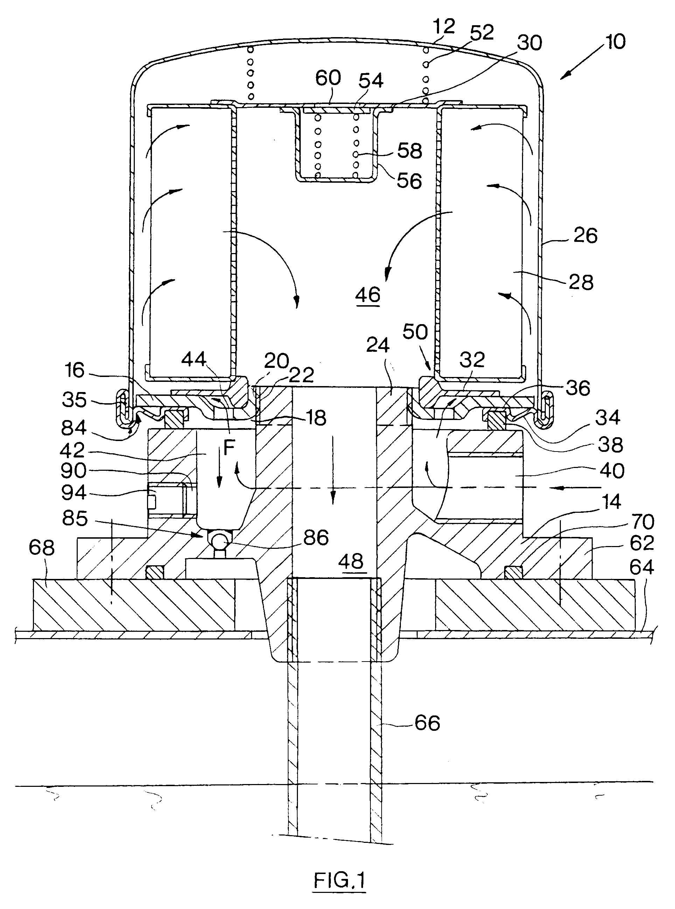

Referring to Figure 1, a filter assembly generally indicated at 10 can be seen and is composed of a filter canister 12 and a filter support or filter head 14, the filter canister 12 being of the spin-on type for ease of replacement. To this end, the canister's annular base plate 16 comprises an extended flange 18 provided with internal thread 20 and which meshes with the external thread 22 on an extending flange 24 of the filter support 14. As such, when the filter canister 12 is contaminated, it easily can be removed from the support 14 for disposal just by unscrewing it therefrom and rapidly can be replaced by a new element.

The housing 26 of the canister 12 contains a filter element 28 using paper as filtering medium for removing foreign particles from contaminated fluid, more specifically hydraulic oil, passing through it and which is received from constituent components of a hydraulic circuit. It will be readily appreciated that any other medium, such as e.g. cloth, which has satisfactory filtering qualities can be applied. The housing 26 further comprises a by-pass valve 30 and a diaphragm rubber seal 32, the function of both of which will be explained furtheron. The already mentioned base plate 16 of the housing 26 is supplemented with a specially shaped annular reinforcement plate 34 which is spot-welded or secured in any other suitable manner to the base plate 16. The reinforcement plate 34 is provided at its outer circumference with an inwardly bent edge 35 hitched up behind a cooperating outwardly turned edge of the cylindrical portion of the filter housing 26. To ensure a tight sealing, the former parts are machined firmly against one another. An annular recess 36 at the inner circumference of the reinforcement plate 34 is provided to hold a rubber seal ring 38 for ensuring a fluidtight seal between the canister 12 and the filter support 14 when the former is firmly screwed onto the latter. Hydraulic oil under pressure is enabled to enter the filter support 14 through a cylindrically shaped inlet port 40 which discharges in an annular chamber 42, the top side of which is open and thereby in direct communication with the base plate 16 of the filter canister 12. Apertures 44 located in a recessed portion of the base plate 16 and equispaced around the central axis of the filter canister 12 are operative to conduct the pressurised oil into the filter housing 26. After having lifted the outer circumferential edge of the diaphragm seal 32, the oil is forced through the filter element 28 towards the inner core 46 thereof and finally discharged through an outlet port 48. The latter port 48 is a central bore in the filter support 14 confined by the flange 24. The path of flow of pressurized oil through the filter assembly during normal operation thereof and as described hereabove is illustrated in Figure 1 by means of arrows.

Turning now again to the diaphragm seal 32 already referred to, the function thereof is twofold. First of all, it prevents oil from flowing in the direction opposite to the one explained hereabove. Indeed, supposing that no oil would be supplied to the filter canister 12 from below the diaphragm seal 32, then the weight of the oil still contained in the canister 12 would press the outer circumferential edge of the seal 32 against the adjacent base plate 16 thereby completely closing off the transition between the upper and lower side of the base plate 16. This feature has been found to be very advantageous when replacing a clogged filter since by this arrangement no remnant oil in the canister 12 can be spilt. The second function of the seal 32 is to form an abutment for the inner side 50 of the filter element 28 which is forced thereagainst by means of a compression spring 52 located between the filter element 28 and the top wall of the filter housing 26. By the same token, the annular inner portion of the seal 32 is pressed against the extending flange 18 of the filter housing base plate 16 in a manner as to prevent drainage of unfiltered oil from the inlet port 40 towards the outlet port 48 without passing through the filter element 28.

A further feature of the filter canister 12 to be discussed is the already mentioned by-pass valve 30 which during normal operation of the filter element 28 does not participate in the filtering process. The by-pass valve 30 is composed of a disc 54, a bracket 56 and a compression spring 58 the respective ends of which are shouldered against the disc 54, respectively the bracket 56. Depending on the spring characteristics of the spring 58, a predetermined pressure against the disc 54 is obtained for closing off the aperture 60 in the top wall of the filter element 28, a situation which is encountered under normal operating conditions of the latter. However, since contaminated oil is continuously processed through the filter element 28, foreign particles gradually are building up inside the same, resulting at the end in a complete clogging thereof. It will be appreciated that during this process oil pressure at the inlet side of the filter assembly 10 will rise in accordance with the gradually rising resistance encountered in the filter element 28 to flow therethrough. As a result, at a certain degree of contamination, the reigning oil pressure in the filter housing 26 will exceed the preset value of the by-pass valve 30 at the same time clearing the aperture 60 for enabling free flow of oil towards the outlet port 48. Consequently, overpressure and possible damage to the hydraulic circuitry in which the filter assembly 10 is incorporated, is avoided and at the same time an indication is given that the filter canister 12 is due for replacement.

Still referring to the filter assembly as seen in Figure 1, the filter support 14 is provided with a set of extending lugs 62 for securing the assembly 10 onto a storage means 64, more specifically an oil tank. Oil discharged throught the outlet port 48 is released via a tube 66 below the oil level in the oil tank 64 in order to avoid ingression of air. The oil tank 64 is completed with a reinforcement support 68 providing a flat surface so as to ensure an adequate sealing between said support 68 and the filter head 14 by means of the seal ring 70.

The filter assembly and its working thus far described is conventional and therefore needs no further detailed description.

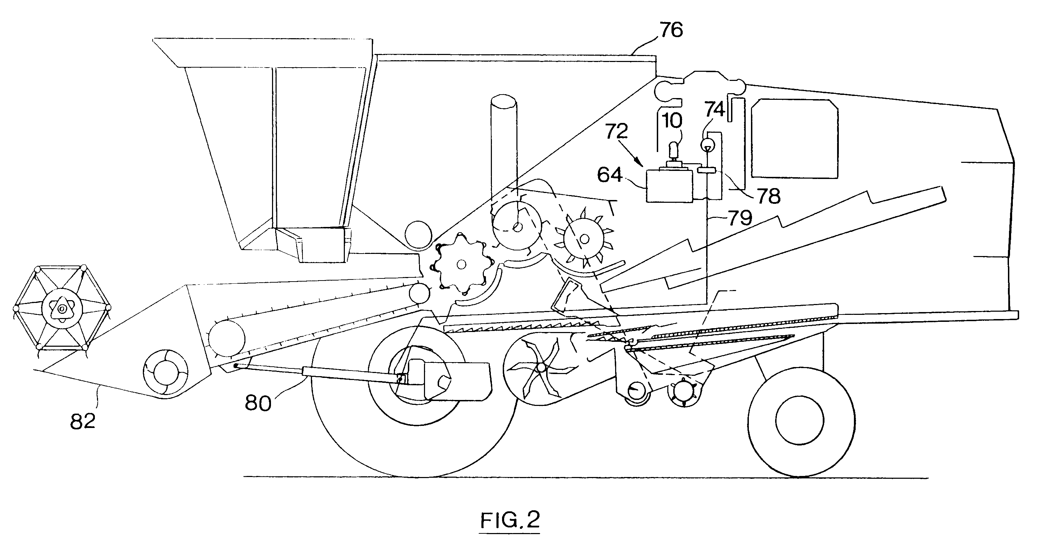

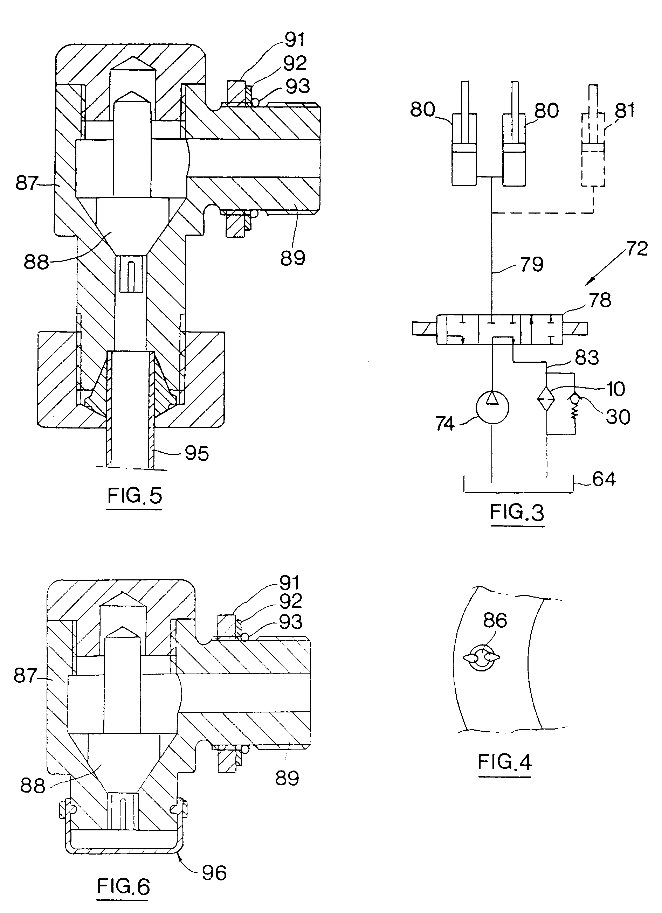

As best seen in Figures 2 and 3, the filter assembly 10 may be incorporated in a hydraulic circuit, generally indicated at 72, of an agricultural machine, more specifically a combine harvester 76. Further hydraulic components building the circuit 72 are e.g. a pump 74, a three-position spool valve 78, actuators 80, the tank 64 and hydraulic lines 79. This non-exhaustive list out of a range of hydraulic components is merely given by way of example and in no way is meant to be limiting. The pair of actuators 80 examplified in Figures 2 and 3 are hydraulic cylinders for raising and lowering the header 82 of the combine 76. Nowadays, since it becomes common practice to provide high capacity combine harvesters with large headers of considerable weight, it sometimes has proven to be imperative to add a third cylinder 81, indicated in phantom in Figure 3, to the pair of actuators 80 mentioned herabove.

In the central position of the valve 78 (the position illustrated in Figure 3) the pump 74 is vented directly to the tank 64 via the return line 83 and the filter 10, meaning that a constant flow is registered therethrough. In contrast therewith, if the valve spool is moved to the right as seen in Figure 3, the actuators 80 together with the pump 74 are vented to the tank 64 and thus a larger flow of oil is passing through the filter 10. Another extreme condition is met when the valve spool is moved to the left as seen in Figure 3, since under those circumstances the entrance of the return line 83 is completely blocked off resulting in a zero flow therethrough. Derived from the foregoing, it will be appreciated that the filter canister 12 receives varying flow rates and accordingly is subjected to varying pressure loads. This particularly applies to the base plate 16 of the filter canister 12. While oil is being fed to the filter assembly 10, the base plate 16 together with the connected reinforcement plate 34 is bended and deflected to some extent towards the inner space of the filter housing 26, whereas during zero flow of oil through the inlet port 40 the base plate 16 assumes it normal position again as no load at all is imposed thereon under this condition. Yet, contrary to what one would be inclined to believe, it has been experienced that for some reason, which will be explained hereafter, also an underpressure can be created in the inlet chamber 42 of the filter head 14 deforming the base plate 16 and reinforcement 34 in the opposite direction i.e. towards the filter head 14 and away from the canister 12.

The creation of the underpressure in the return line 83 is to be explained by the following. With the valve 78 in the central position all oil delivered by the pump 74 is directly conducted towards the filter assembly 10 as already described. Depending on the pump characteristics, its number of revolutions and the return line diameter, a given velocity of the returned oil can be measured. When the valve 78 is shifted to its right position as seen in Figure 3, the supply of oil to the return line 83 is abruptly stopped however not the flow of oil already present therein. Indeed, due to the inertia of the oil column in motion, the same has a tendency to continue its flow through the filter assembly 10 and towards the tank 64. As a result and since the valve 78 closes tightly in its extreme right position, an underpressure is created in the return line 83 and the inlet port 40 of the filter head 14. Said underpressure can not be made undone by drawing oil from the filter canister 12 as oil flow in the opposite to normal direction is prevented by the diaphragm seal 32. As such, the underside of the filter housing 26, being the base plate 16 and reinforcement 34 , are being sucked towards the filter head 14 as already described hereabove. This phenomenon is even more clearly envisaged when the pair of cylinders 80 are vented to the tank 64 and then suddenly are subjected to the system pressure again. In practice such a sequence of action is encountered when during lowering of the combine header 82 it suddenly is decided that an upward adjustment is imperative and is obtained by moving the valve 78 from its extreme left to its extreme right position. In the former position of the valve 78, not only the pump 74 will discharge through the filter assembly 10 but also the oil contained in the pair of cylinders 80 will be dumped through the return line 83. Consequently, oil will flow at considerable velocities through the filter inlet port 40; velocities which are a multiple of the speed experienced with the valve 78 in its central position. Caused thereby, a still higher underpressure in the return line 83 is to be expected. It will be readily understood that the more hydraulic components are dumping their oil through the return line at the same time and whereafter the flow is suddenly stopped, the higher the underpressure will build-up. This for example is the case when large headers are attached to the combine, requiring the intervention of a third lift cylinder 81 besides the pair of actuators 80.

In accordance with the explanation hereabove, it thus is made clear that during operation of the hydraulic system 72 of the combine harvester 76 pressure alternations from positive to negative will occur in the return line 83 and the filter head 14. As a result, the base plate 16 and reinforcement 34 of the filter housing 26 are subjected to alternating pulsating loads oriented in opposite directions deflecting the filter housing bottom wall upwardly and downwardly as seen in Figure 1. It has been experienced that due to material fatigue these pulsations may cause cracks in the area indicated at 84 causing oil leakage. Indeed, since there is no sealing connection between the base plate 16 and the vertical cylindrical portion of the filter housing 26, structural failure of the reinforcement plate 34 inevitably will lead to oil draining from the inside of the canister towards the free atmosphere. The foregoing necessitates premature disposal of the used canister, possibly long before the filter element 28 would have been clogged. This of course is inadmissable.

To obviate this drawback, the present invention aims to exclude the occurrence of an underpressure in the return line 83 and the filter head 14. Following a preferred embodiment of the invention as seen in Figure 1, an underpressure relief means, more specifically a ball type check-valve or non-return valve 85, is incorporated in the bottom side of the filter head chamber 42. The ball 86 is contained in a cylindrical bore which flares inwardly to a bore of smaller diameter. The latter bore is in direct communication with the inner space of the tank 64 via cut-away portions in the support 68 and the top side of the tank 64.

The ball 86 is prevented from entering the chamber 42 by providing two small impressions in the material of the filter head 14 somewhat above the ball 86 as best can be seen following view F of Figure 4. It will be appreciated that still other solutions are available to secure the ball 86 in place e.g. a snap ring (not shown) inserted in the larger bore. It should be kept in mind however that the check-valve must be operable to allow free flow in one direction with complete shut-off in the reverse direction. As seen in Figure 1, the latter direction is oriented towards the tank 64, since the ball 86 is able to close-off the smaller bore of the valve completely. Therefore, whatever means is applied to prevent the ball 86 from leaving the valve 85, caution must be taken not to prevent a free flow in a direction towards the chamber 42. This is accomplished by the provision of the mentioned impressions or the snap ring since they still allow flow around the ball 86 with the latter in its upper abutted position.

The function of the check-valve 85 will now be explained in more detail with reference to Figures 1 and 3. Pressurized oil is flowing through the filter assembly 10 with the valve 78 in its central or left position. The ball 86 is pressed against its lower abutment thereby completely shutting-off the check-valve 85 so that no oil can escape from the chamber 42 in that direction. Yet, under the conditions described above and wherein an underpressure is starting to build-up in the filter head 14, the ball 86 is lifted from its seat as soon as some degree of underpressure is detected. At the same time, air is drawn into the chamber 42 from the tank 64, thus preventing the underpressure to develop further. It thus is made clear that with the underpressure relieve valve 85 incorporated in the filter assembly 10, no underpressure is allowed to build-up underneath the canister 12. As a result, the underside thereof merely has to cope with overpressure deflecting the base plate 16 and reinforcement plate 34 generally in one direction only, what considerably lengthens the life of the filter canister, since the filter material will not be loaded any more above its assumed specifications.

Drawing air from the tank 64 in the hydraulic circuitry, does not present any problem since the tank 64 is provided with a filler breather (not shown). Moreover, it should be noted that only a small volume of air is needed to undo underpressure so that no hydraulic related problems are to be feared from air entering the circuitry. Also, oil polluted with air anyhow is directly discharged via the filter assembly 10 into the tank 64, wherein opportunity is given for the air to evacuate from the oil.

Figures 5 and 6 show some other embodiments of the present invention which can be used instead of the ball type non-return valve 85 incorporated in the filter head 14. The valve 87 of Figure 5 is a self-contained unit comprising a wedge shaped poppet 88 able to shut-off flow in one direction (the position illustrated) and to allow flow in the opposite direction when the poppet is lifted. The non-return valve 87 further is provided with a threaded extension 89 which adjustably can be received by an inlet port 90 leading into the chamber 42 of the filter head 14. A nut 91, a washer 92 and an O-ring 93 on the extension 89 enable to tightly connect the valve 87 to the filter head 14 in any desired orientation. The valve 87 further is provided with a tube 95 penetrating into the free space above the oil level in the tank 64 or eventually may even reach beneath the level thereof. In operation, the valve 87 will behave in an identical manner as the ball type valve 85 i.e. from the moment that an initial underpressure is being sensed in the filter head 14, the poppet 88 will be lifted and air is piped in. In case the tube 95 reaches beneath the oil level in the tank 64, then instead of air, additional oil will be sucked into the filter head. The medium supplied makes no difference however, as long as the underpressure is prevented from developing. The poppet valve 87 of Figure 6 is identical to the one already described except for the fact that no connection is foreseen to the tank 64. Instead, a screen 96 is secured to the free end of the valve 87 for filtering drawn-in air from the environmental atmosphere. It is noted that in case the filter head 14 should not be equiped with the valve 87, then the inlet port 90 still may be closed off by a plug 94 as shown in Figure 1.

Finally, it will be seen that the present invention is particularly useful when applied in connection with filter assemblies positioned in the return line of a hydraulic circuit wherein the flow of pressurized oil is not constant. Especially if extreme variations in the oil flow through the filter assembly are to be expected, an underpressure is very likely to occur in the filter head. Previously, manually operated valves could be closed gradually in order to obtain a more gentle shutoff of the oil supply towards the filter assembly. Thereby extreme pressure pulsations were avoided. However nowadays, electrically operated spool valves are commonly used which close in fractions of seconds and which thereby cause high inertia in the return line when all oil supply thereto is suddenly arrested. This in turn leads to the creation of an underpressure which is responsible in the end for structural failures of the filter housing. The underpressure relief means as described afford a simple but effective expedient to eliminate the cause of fatigue failures. As a direct result, the life of a filter is prolonged and the need of premature disposal thereof is avoided.

## Claims

1. A filter assembly (10) for use in the return line (83) of a hydraulic circuit (72) and comprising :
- an inlet port (40) for receiving hydraulic fluid from constituent components (74, 78, 80, 81) of the hydraulic circuit (72),
- an outlet port (48) for conducting the hydraulic fluid to a storage means (64), and
- a filter element (28) positioned inbetween the inlet and outlet port (40, 48) of the filter assembly (10) and operative to remove foreign particles from the hydraulic fluid,
characterized in that :
the filter assembly (10) further also comprises underpressure relief means (85, 87) located inbetween the inlet port (40) and the filter element (28) for preventing that an underpressure is created at said location.

2. A filter assembly according to claim 1, characterized in that the assembly is composed of a disposable spin-on canister (12) containing the filter element (28) and a filter support (14) to which the canister (12) is operatively connected and which comprises the underpressure relief means (85, 87).

3. A filter assembly according to claim 2, characterized in that the underpressure relief means (85) forms integral part of the filter support (14).

4. A filter assembly according to claim 2, characterized in that the underpressure relief means (87) is a self-contained unit optionally connectable to the filter support (14).

5. A filter assembly according to claim 3 or 4, characterized in that the underpressure relief means (85, 87) is a poppet type check-valve.

6. A filter assembly according to any of the preceding claims, characterized in that the underpressure relief means (85, 87) communicates with the storage means (64) and that air or hydraulic fluid is drawn in from the storage means (64) via the underpressure relief means (85, 87) into the filter support (14) as soon as an underpressure would tend to build up therein.

7. A filter assembly according to any of claims 1-5, characterized in that the underpressure relief means (85, 87) communicates with the atmosphere and that air is drawn in from the atmosphere via the underpressure relief means (85, 87) into the filter support (14) as soon as an underpressure would tend to build up therein.

8. A filter assembly according to any of the preceding claims, characterized in that the filter assembly (10) forms part of a hydraulic circuit (72) on an agricultural machine (76).

## Patentansprüche

1. Filteranlage (10) zur Verwendung in der Rücklaufleitung (83) eines Hydraulikkreises (72) mit:
- einem Einlaßanschluß (40) zum Empfang von Hydraulikflüssigkeit von Bestandteilen (74, 78, 80, 81) des Hydraulikkreises (72),
- einem Auslaßanschluß (48) zum Zuführen der Hydraulikflüssigkeit an eine Speichereinrichtung (64), und
- einem Filterelement (28), das zwischen den Einlaß- und Auslaßanschluß (40, 48) der Filteranlage (10) angeordnet ist und das Entfernen von Fremdkörpern aus der Hydraulikflüssigkeit bewirkt,
dadurch gekennzeichnet, daß die Filteranlage (10) weiterhin Unterdruck-Entlastungseinrichtungen (85, 87) umfaßt, die zwischen dem Einlaßanschluß (40) und dem Filterelement (28) angeordnet sind, um die Ausbildung eines Unterdruckes an dieser Stelle zu verhindern.

2. Filteranlage nach Anspruch 1,
dadurch gekennzeichnet, daß die Anlage aus einem das Filterelement (28) enthaltenden entfernbaren, aufschraubbaren Kanister (12) und einem Filterträger (14) besteht, mit dem der Kanister (12) betriebsmäßig verbunden ist und der die Unterdruck-Entlastungseinrichtung (85, 87) umfaßt.

3. Filteranlage nach Anspruch 2,
dadurch gekennzeichnet, daß die Unterdruck-Entlastungseinrichtung (85) einen einstückigen Teil des Filterträgers (14) bildet.

4. Filteranlage nach Anspruch 2,
dadurch gekennzeichnet, daß die Unterdruck-Entlastungseinrichtung (87) eine in sich abgeschlossene Einheit ist, die wahlweise mit dem Filterträger (14) verbindbar ist.

5. Filteranlage nach Anspruch 3 oder 4,
dadurch gekennzeichnet, daß die Unterdruck-Entlastungseinrichtung (85, 87) ein Ventilkegel-Rückschlagventil ist.

6. Filteranlage nach einem der vorhergehenden Ansprüche,
dadurch gekennzeichnet, daß die Unterdruck-Entlastungseinrichtung (85, 87) mit der Speichereinrichtung (64) in Verbindung steht, und daß Luft oder Hydraulikflüssigkeit von der Speichereinrichtung (64) über die Unterdruck-Entlastungseinrichtung (85, 87) in den Filterträger (14) eingesaugt wird, sobald sich in diesem ein Unterdruck aufzubauen versucht.

7. Filteranlage nach einem der Ansprüche 1 bis 5,
dadurch gekennzeichnet, daß die Unterdruck-Entlastungseinrichtung (85, 87) mit der Atmosphäre in Verbindung steht, und daß Luft von der Atmosphäre über die Unterdruck-Entlastungseinrichtung (85, 87) in den Filterträger (14) eingesaugt wird, sobald sich ein Unterdruck in diesem aufzubauen versucht.

8. Filteranlage nach einem der vorhergehenden Ansprüche,
dadurch gekennzeichnet, daß die Filteranlage (10) einen Teil eines Hydraulikkreises (72) einer landwirtschaftlichen Maschine (76) bildet.

## Revendications

1. Ensemble formant filtre (10) destiné à être utilisé dans le conduit de retour (83) d'un circuit hydraulique (72) et comportant :
- un orifice d'entrée (40) destiné à recevoir un fluide hydraulique provenant d'organes constitutifs (74, 78, 80, 81) du circuit hydraulique (72),
- un orifice de sortie (48) destiné à diriger le fluide hydraulique vers un moyen de stockage (64), et - un élément formant filtre (28) placé entre les orifices d'entrée et de sortie (40, 48) de l'ensemble formant filtre (10) et agissant pour éliminer du fluide hydraulique des particules étrangères,
caractérisé en ce que :
l'ensemble formant filtre (10) comporte également des moyens (85, 87) de protection contre une dépression situés entre l'orifice d'entrée (40) et l'élément formant filtre (28) afin d'éviter la création d'une dépression à cet endroit.

2. Ensemble formant filtre selon la revendication 1, caractérisé en ce que l'ensemble est constitué d'un boîtier jetable (12) mis en place par rotation contenant l'élément formant filtre (28) et d'un support de filtre (14) auquel le boîtier (12) est relié d'une manière fonctionnelle et qui comporte les moyens (85, 87) de protection contre une dépression.

3. Ensemble formant filtre selon la revendication 2, caractérisé en ce que les moyens (85) de protection contre une dépression font partie intégrante du support de filtre (14).

4. Ensemble formant filtre selon la revendication 2, caractérisé en ce que les moyens (87) de protection contre une dépression consistent en un ensemble autonome apte à être relié facultativement au support de filtre (14).

5. Ensemble formant filtre selon la revendication 3 ou 4, caractérisé en ce que les moyens (85, 87) de protection contre une dépression consistent en une soupape de retenue du type à champignon.

6. Ensemble formant filtre selon l'une quelconque des revendications précédentes, caractérisé en ce que les moyens (85, 87) de protection contre une dépression communiquent avec le moyen de stockage (64), et en ce que de l'air ou un fluide hydraulique est aspiré dans le support de filtre (14) à partir du moyen de stockage (64) par l'intermédiaire des moyens (85, 87) de protection contre une dépression, dès qu'une dépression a tendance à s'y accumuler.

7. Ensemble formant filtre selon l'une quelconque des revendications 1 à 5, caractérisé en ce que les moyens (85, 87) de protection contre une dépression communiquent avec l'atmosphère, et en ce que de l'air est aspiré dans le support de filtre (14) à partir de l'atmosphère par l'intermédiaire des moyens (85, 87) de protection contre une dépression, dès qu'une dépression a tendance à s'y accumuler.

8. Ensemble formant filtre selon l'une quelconque des revendications précédentes, caractérisé en ce que l'ensemble formant filtre (10) fait partie d'un circuit hydraulique (72) prévu sur une machine agricole (76).
